Europäisches Patentamt

(19) European Patent Office

Office européen des brevets

(11) Publication number: **0 166 163**
**B1**

(12) **EUROPEAN PATENT SPECIFICATION**

(45) Date of publication of the patent specification:
**15.07.87**

(21) Application number: **85105986.5**

(22) Date of filing: **15.05.85**

(51) Int. Cl.⁴: **B 65 G 47/14**

(54) **Parts feeder.**

(30) Priority: **29.05.84 JP 79321/84**

(43) Date of publication of application:
**02.01.86 Bulletin 86/1**

(45) Publication of the grant of the patent:
**15.07.87 Bulletin 87/29**

(84) Designated Contracting States:
**BE CH DE FR IT LI NL SE**

(56) References cited:
**DE - A - 2 124 581**

(73) Proprietor: **NIPPON NOTION KOGYO CO., LTD.,**
**13, 2-chome, Kanda-Sakuma-cho Chiyoda-ku, Tokyo**
**(JP)**

(72) Inventor: **Seki, Fumio, 621, Horikawakoizumi-cho,**
**Toyama-shi Toyama-ken (JP)**

(74) Representative: **Casalonga, Axel et al, BUREAU D.A.**
**CASALONGA OFFICE JOSSE & PETIT Morassistrasse 8,**
**D-8000 München 5 (DE)**

ACTORUM AG

## Description

The present invention relates to a parts feeder for successively supplying parts each composed of a shank having a flange on one end thereof, such as snap buttons, rivet-like buttons, or tacks, for example.

One known parts feeder designed for feeding flanged components comprises a rotatable drum having a plurality of slots defined at regular intervals in the inner circumferential edge of the drum. The flanged parts with their shanks fitted in the slots are successively fed into a chute by rotating the rotatable drum. If parts are trapped in the slots by dust or chips, then they will remain carried on the drum without being supplied to the chute. The trapped parts may hit the inner surface of a hopper frame of the parts feeder to thereby cause the drum to rotate at irregular rates, with the result that the parts cannot be fed out smoothly.

When a component is jammed in a slot with its flange positioned on the outer peripheral surface of the drum and is moved on by the rotation of the drum, the trapped component cannot be shaked off the slot simply by impacting the drum because the component flange is sandwiched between the drum and the hopper frame. It has been customary to remove such jammed component by stopping the parts feeder and then manually taking the component out of the slot. This practice is however time-consuming and tedious, resulting in long downtime and low efficiency.

The present invention seeks to provide a parts feeder for successively supplying parts smoothly without interruption, the parts feeder having a means for automatically removing trapped parts from slots in a rotatable drum without involving manual intervention and downtime for removal.

According to the present invention, there is provided a parts feeder for successively feeding parts each having a shank and a flange on one end thereof, said parts feeder comprising: a hopper including a hopper frame having an upper charging hole and a side opening; a rotatable shaft rotatably mounted on said hopper frame; a drum fixedly mounted on said rotatable shaft and having a storage chamber communicating with said side opening, said drum having a circumferential portion rotatably fitted in said side opening and having a plurality of slots defined therein at regular intervals for receiving the shanks of the parts; and a chute mounted on said hopper frame for discharging the parts dropped from said slots when said drum is rotated by said shaft in a direction, characterized by a scraper mounted on said hopper frame adjacent to said circumferential portion of said drum and having a cam surface facing toward said upper charging hole, lying across at least one of said slots and slanted progressively from said drum into said upper charging hole in said direction for removing those parts from said slots wich have remained trapped past said chute to drop the removed parts into said upper charging hole.

Many other advantages and features of the present invention will become manifest to those versed in the art upon making reference to the detailed description and the accompanying sheets of drawings in which a preferred structural embodiment incorporating the principles of the present invention is shown by way of illustrative example.

Figure 1 is a vertical cross-sectional view of a parts feeder according to the present invention;

Figure 2 is a side elevational view of the parts feeder, with a rotatable drum shown in phantom;

Figure 3 is a cross-sectional view taken along line III-III of Figure 2;

Figure 4 is an enlarged perspective view of a scraper in the parts feeder; and

Figure 5 is a cross-sectional view taken along line V-V of Figure 2.

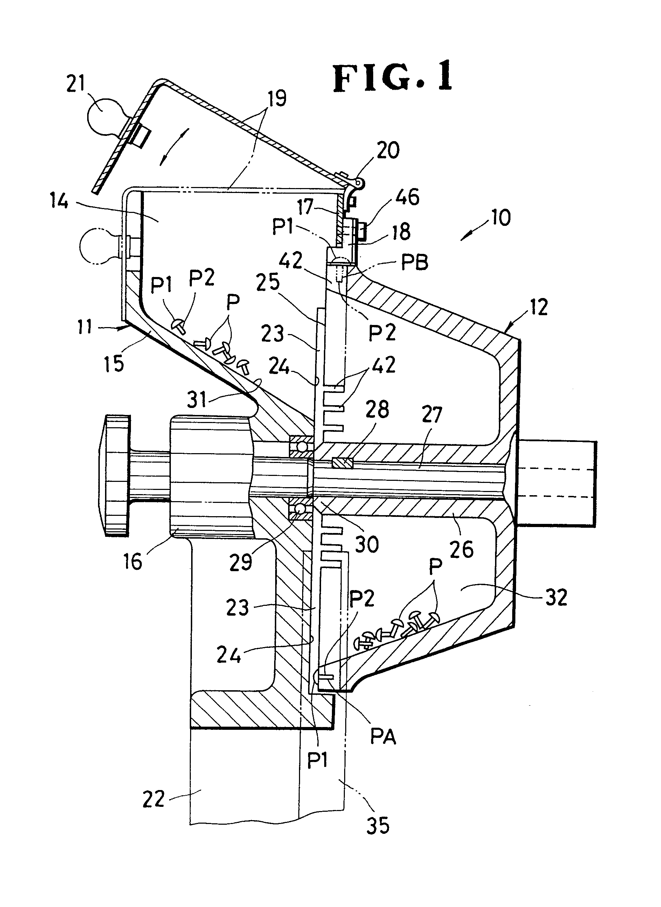

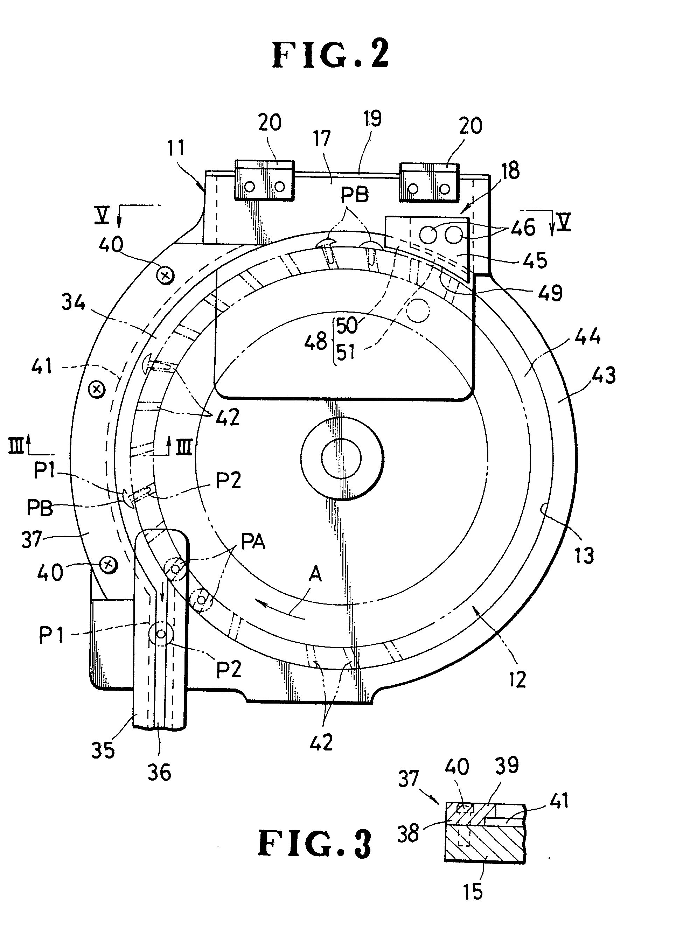

The principles of the present invention are particularly advantageous when embodied in a parts feeder, generally designated by the reference numeral 10, shown in Figures 1 and 2.

The parts feeder 10 of the illustrated embodiment is designed to supply tacks P each having a shank P2 and a flange P1 on one end thereof. However, the parts feeder 10 can supply other parts such as snap buttons, rivet-like buttons, or machine elements which have flanges and shanks.

As illustrated in Figures 1 and 2, the parts feeder 10 generally comprises a hopper 11 and a rotatable hollow drum 12.

The hopper 11 has a side opening 13 and an upper charging hole 14 communicating therewith for charging the parts P therethrough into a storage chamber 32 in the rotatable drum 12. The hopper 11 also includes a hopper frame 15 having a sloping surface 31 leading to the side opening 13 and a central boss 16. The hopper frame 15 has an upper portion to which a cover 17 is attached. A scraper 18 is fastened to the cover 17 for removing jammed parts PB, as described later on. A lid 19 is pivotably mounted on the cover 17 by hinges 20 for opening and closing the charging hole 14, the lid 19 having a knob 21. The hopper frame 15 is supported on an arm 22 mounted on a table (not shown).

The hopper frame 15 has a guide groove 23 for guiding the flanges P1 of parts P, the guide groove 23 being defined between a recessed side edge 24 of the hopper frame 15 and an end edge 25 of the rotatable drum 12. The rotatable drum 12 has a frustoconical shape including a central boss 26 through which extends a shaft 27 fixed to the central boss 26 by a key 28. The shaft 27 can be rotated about its own axis by a suitable drive means. Thus, the rotatable drum 12 is rotated by the shaft 27. The shaft 27 is rotatably mounted by a bearing 29 in the boss 16 of the hopper 11. The central boss 26 has a distal end 30 projecting beyond the end edge 25 of the rotatable drum 12 and held in abutment against the bearing 29.

A chute 35 is attached to the hopper frame 15 at a lower side portion thereof, the chute 35 having a vertical guide groove 36 communicating with the guide groove 23.

As illustrated in Figure 2, an arcuate guide plate 37 extending on one side of the hopper frame 15 between the cover 17 and the chute 35. The arcuate guide plate 37 is fastened to the hopper frame 15 by a plurality of screws 40. As shown in Figure 3, the guide plate 37 has a thicker portion 38 and a thinner portion 39, the screws 40 extending through the thicker portion 38. The thinner portion 39 is spaced from the hopper frame 15 to define a groove 41 therebetween.

The rotatable drum 12 has a plurality of slots 42 defined at regular intervals in a circumferential portion 44 thereof disposed closely to the hopper frame 15. The slots 42 communicate with the storage chamber 32 in the rotatable drum 12 and also with the guide groove 23 and the charging hole 14, as shown in Figure 1. The slots 42 serve to receive the shanks P2 of parts P. As shown in Figure 2, an arcuate groove 34 is defined between the outer peripheral surface of the circumferential portion 44 of the drum 12 and the inner peripheral surface of the arcuate guide plate 37, the arcuate groove 34 extending between the scraper 18 and the chute 35.

The hopper frame 15 includes an arcuate rib 43 extending from the scraper 18 to the chute 35 in diametrically opposite relation to the arcuate guide plate 37. The arcuate rib 43 projects axially from the side edge 24 of the hopper frame 15 and defines a portion of the opening 13. The circumferential portion 44 of the rotatable drum 12 has its outer peripheral surface slidably held snugly against the inner peripheral surface of the arcuate rib 43, i.e., rotatably fitted in the opening 13.

As shown in Figures 2, 4, and 5, the scraper 18 is composed of an attachment portion 45 fixed to the cover 17 by a pair of screws 46 extending respectively through a pair of screw holes 47 in the attachment portion 45, a cam surface 48 for engaging the flanges P1 of the parts P trapped in the slots 42 to force the parts P out of the slots 42, and an arcuate surface 49 extending closely along the outer peripheral surface of the circumferential portion 44 of the drum 12.

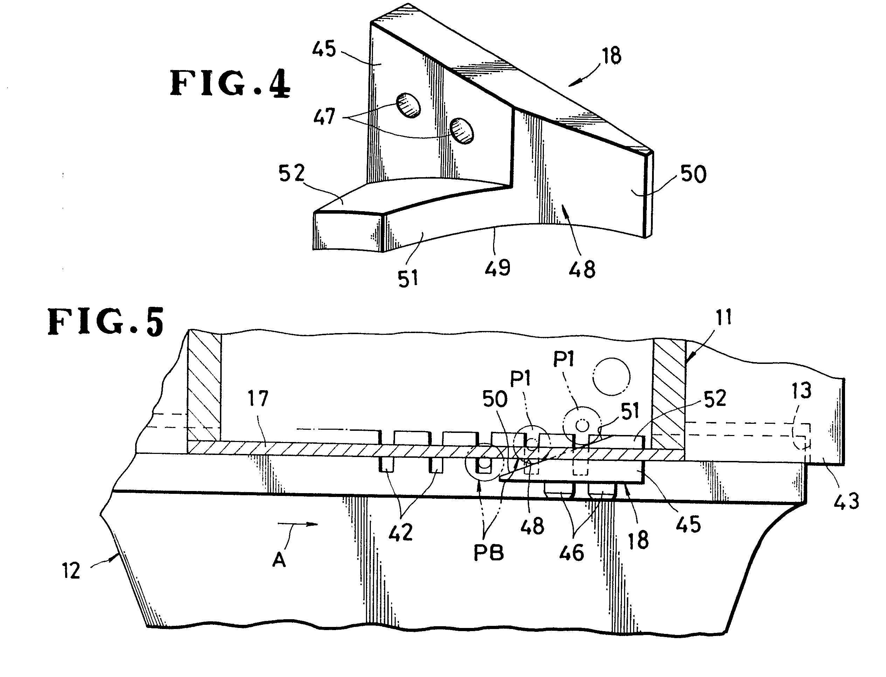

As illustrated in Figures 4 and 5, the cam surface 48 faces toward the charging hole 14 of the hopper 11 and lies across the slots 42. The cam surface 48 is progressively slanted toward the hopper 11 in the direction of rotation of the rotatable drum 12, indicated by the arrow A in Figure 5. The cam surface 48 is composed of a first portion 50 disposed outside of the cover 17 and a second portion 51 extending contiguously from the first portion 50 into the upper charging hole 14, the second portion 51 being defined by a projection 52 extending from the attachment portion 45. Therefore, as shown in Figure 5, the parts P with their shanks P2 trapped the slots 42 can be removed by the scraper 18 automatically from the slots 42 upon rotation of the drum 12 in the direction of the arrow A since the flanges P1 are engaged by the cam surface 48 and progressively moved from the first portion 50 toward the second portion 51 until finally the parts P are thrown into the charging hole 14.

Operation of the parts feeder 10 is as follows: The lid 19 is opened, and the parts P are charged into the charging hole 14. The charged parts P then pass through the side opening 13 into the storage chamber 32 in the rotatable drum 12. Since the rotatable drum 12 is frustoconical in shape, the parts P are gathered by gravity toward the end edge 25 of the drum 12, with the shanks P2 fitted in the slots 42. Those parts, indicated at PA, which have their flanges P1 placed in the guide grove 23 with the shanks P2 in the slots 42 are moved toward the inlet of the chute 35 as the drum 12 rotates, and then dropped into the guide groove 36 of the chute 35.

Those parts, indicated at PB, which have their flanges P1 in the groove 34 and the shanks P2 in the slots 42 and stay trapped or jammed in such a position because of dust or chip deposits or under the pressure of many parts P stored in the drum 12, are however carried on upwardly (Figures 1 and 2) by the drum 12 without being supplied into the chute 35.

The parts PB then reach the scraper 18, and their flanges P1 are engaged by the first cam surface portion 50, as shown in Figure 5. The rotation of the drum 12 in the direction of the arrow A causes the flanges P1 to be forcibly displaced from the first cam surface portion 50 to the second cam surface portion 51, from which the parts PB drop into the hopper 11 and hence into the rotatable drum 12. Therefore, the trapped parts PB can automatically be removed and retrieved into the drum 12 without stopping the operation of the parts feeder 10 and also without requiring manual labor for removal. Since the trapped parts PB do not hit the hopper frame 7 in a manner to disturb the rotation of the drum 12, the drum 12 is rotated continuously at a uniform rate for smoothly supplying the parts P successively into the chute 35.

The groove 41 shown in Figures 2 and 3 serves to partly receive the flanges P1 of certain parts P which are misplaced in the groove 34, and these parts P can also be delivered to the scraper 18 while being guided by the grooves 34, 41 as the drum 12 rotates.

## Claims

1. A parts feeder for successively feeding parts each having a shank (P2) and a flange (P1) on one end thereof, said parts feeder comprising: a hopper (11) including a hopper frame (15) having an upper charging hole (14) and a side opening (13); a rotatable shaft (27) rotatably mounted on said hopper frame (15); a drum (12) fixedly mounted on said rotatable shaft (27) and having a storage chamber (32) communicating with said side opening (13), said drum (12) having a circumferential portion (44) rotatably fitted in said side opening (13) and having a plurality of slots (42) defined therein at regular intervals for receiving the shanks (P2) of the parts (P); and a chute (35) mounted on said hopper frame (15) for discharging the parts (PA) dropped from said slots (42) when said drum (12) is rotated by said shaft (27) in a direction, characterized by a scraper (18) mounted on said hopper frame (15) adjacent to said circumferential portion (44) of said drum (12) and having a cam surface (48) facing toward said upper charging hole (14), lying across at least one of said slots (42) and slanted progressively from said drum (12) into said upper charging hole (14) in said direction for removing those parts (PB) from said slots (42) which have remained trapped past said chute (35) to drop the removed parts (PB) into said upper charging hole (14).

2. A parts feeder according to claim 1, including a cover (17) attached to said hopper frame (15) adjacent to said upper charging hole (14), said scraper (18) being fastened to said cover (17).

3. A parts feeder according to claim 2, said cam surface (48) comprising a first portion (50) disposed outside of said cover (17) and a second portion (51) extending contiguously from said first portion (50) into said upper charging hole (14).

4. A parts feeder according to claim 2, said scraper (18) including an arcuate surface (49) extending closely along an outer peripheral surface of said circumferential portion (44).

## Patentansprüche

1. Zuführreinrichtung zum aufeinanderfolgenden Zuführen von Teilen, die jeweils einen Schaft (P2) und einen Flansch (P1) an einem Ende desselben aufweisen, bestehend aus: einem Trichter (11) mit einem Trichterrahmen (15), der eine obere Einfüllöffnung (14) und eine seitliche Öffnung (13) aufweist, einer drehbaren Welle (27), die in dem Trichterrahmen (15) drehbar gelagert ist, einer Trommel (12), die auf der drehbaren Welle (27) drehfest angeordnet ist und eine mit der seitlichen Öffnung (13) in Verbindung stehende Speicherkammer (32) umfasst, wobei die Trommel (12) einen Umfangsbereich (44) aufweist, der in die seitliche Öffnung (13) eingesetzt ist und der mit einer Vielzahl von gleichabständig angeordneten Schlitzen (42) zur Aufnahme der Schäfte (P2) der Teile (P) versehen ist, und einer Rutsche (35), die an dem Trichterrahmen (15) angebracht ist, um die Teile (PA) abzugeben, die aus den Schlitzen (42) herausfallen, wenn die Trommel (12) durch die Welle (27) in einer Richtung verdreht wird, gekennzeichnet durch einen Abstreifer (18), der an dem Trichterrahmen (15) nahe dem Umfangsbereich (44) der Trommel (12) angebracht ist und eine der oberen Einfüllöffnung zugekehrte Kurvenfläche (48) aufweist, die sich über mindestens einen der Schlitze (42) erstreckt und in der besagten Richtung zunehmend von der Trommel (12) in die obere Einfüllöffnung (14) hineinragt, um diejenigen Teile (PB) aus diesen Schlitzen (42) zu beseitigen, die hinter der Rutsche (35) arretiert geblieben sind, um diese beseitigten Teile (PB) in die obere Einfüllöffnung (14) abzuwerfen.

2. Zuführreinrichtung nach Anspruch 1, gekennzeichnet durch einen Deckel (17), der an dem Trichterrahmen (15) nahe der oberen Einfüllöffnung (14) befestigt ist, wobei der Abstreifer (18) an dem Deckel (17) befestigt ist.

3. Zuführreinrichtung nach Anspruch 2, dadurch gekennzeichnet, dass die Kurvenfläche (48) einen Ausserhalb des Deckels (17) angeordneten ersten Bereich (50) und einen zweiten Bereich (51) aufweist, der sich von dem ersten Bereich (50) ausgehend in die obere Einfüllöffnung (14) erstreckt.

4. Zuführreinrichtung nach Anspruch 2, dadurch gekennzeichnet, dass der Abstreifer eine bogenförmige Fläche (49) aufweist, die sich in geringem Abstand längs der äusseren Umfangsfläche des Umfangsbereichs (44) erstreckt.

## Revendications

1. Dispositif d'alimentation de pièces pour avancer successivement des pièces comportant chacune une tige (P2) et, à une de leurs extrémités, une tête saillante (P1), le dispositif d'alimentation de pièces précité comprenant: une trémie (11) comprenant un corps (15) de trémie comportant un trou supérieur de chargement (14) et une ouverture latérale (13); un arbre rotatif (27) monté de façon tournante sur le corps (15) de trémie; un tambour (12) monté de façon fixe sur l'arbre rotatif (27) et comportant une chambre d'emmagasinage (32) communiquant avec l'ouverture latérale (13), le tambour (12) comportant une partie circonférentielle (44) montée de façon tournante dans l'ouverture latérale (13) et comportant une pluralité de fentes (42) qui y sont formées à des intervalles réguliers pour recevoir les tiges (P2) des pièces (P); et une goulotte (35) montée sur le corps (15) de trémie pour décharger les pièces (PA) tombant des fentes (42) quand le tambour (12) est entraîné en rotation par l'arbre (27) dans un sens, caractérisé par une racle (18) montée sur le corps (15) de trémie de façon adjacente à la partie circonférentielle (44) du tambour (12) et comportant une surface de poussée (48) qui est orientée vers le trou supérieur de chargement (14) et qui s'étend en travers d'au moins une des fentes (42) et s'incline progressivement depuis le tambour (12) jusque dans le trou supérieur de chargement (14) dans le sens précité pour chasser les fentes (42) des pièces (PB) qui continuent d'être emprisonnées au-delà de la goulotte (35) de manière que les pièces chassées (PB) tombent dans le trou supérieur de chargement (14).

2. Dispositif d'alimentation de pièces selon la revendication 1, comprenant un couvercle (17) fixé au corps (15) de trémie en un point adjacent au trou supérieur de chargement (14), la racle (18) étant fixée au couvercle (17).

3. Dispositif d'alimentation de pièces selon la revendication 2, la surface de poussée (48) comprenant une première partie (50) disposée à l'extérieur du couvercle (17) et une seconde partie (51) s'étendant de façon contiguë depuis la première partie (50) jusque dans le trou supérieur de chargement (14).

4. Dispositif d'alimentation de pièces selon la revendication 2, la racle (18) comprenant une surface courbe (49) s'étendant près et le long d'une surface périphérique extérieure de la partie circonférentielle (44).

# FIG. 1

# FIG.2

# FIG.3

FIG.4

FIG.5